# EUROPÄISCHE PATENTSCHRIFT

(11) **EP 3 220 068 B1**
(45) Veröffentlichungstag und Bekanntmachung des Hinweises auf die Patenterteilung: **09.09.2020**
(21) Anmeldenummer: 17161321.9
(22) Anmeldetag: 16.03.2017
(51) Int. Cl.: F24F 7/04, F24F 3/044, F24F 12/00, F24F 7/00

(54) **BELÜFTUNGSSYSTEM ZUR ERZEUGUNG EINES LUFTSTROMS IN EINEM GEBÄUDE**
VENTILATION SYSTEM FOR GENERATING AN AIR FLOW IN A BUILDING
SYSTÈME DE VENTILATION DESTINÉ À PRODUIRE UN FLUX D'AIR DANS UN BÂTIMENT

(30) Priorität: 17.03.2016 AT 502262016
(43) Veröffentlichungstag der Anmeldung: 20.09.2017
(73) Patentinhaber: Music, Admir, 6401 Inzing (AT)
(72) Erfinder: Music, Admir, 6401 Inzing (AT)
(74) Vertreter: Torggler & Hofinger Patentanwälte

(56) Entgegenhaltungen:
- EP-A1- 0 016 337
- DE-A1- 19 614 913

## Beschreibung

Die Erfindung betrifft eine Anordnung von einem Belüftungssystem in einem Gebäude mit den Merkmalen des Oberbegriffes des Anspruches 1.

Weiters soll ein Gebäude mit einem erfindungsgemäßen Belüftungssystem und ein Verfahren zum Belüften des Gebäudes angegeben werden.

Belüftungssysteme für Gebäude zählen bereits zum Stand der Technik. Derartige Belüftungssysteme benötigen jedoch zur Erregung eines Luftstromes einen permanent aktiven Ventilator. Zudem wird die aus dem Dachbereich austretende Abluft des Belüftungssystems nicht genutzt. Außerdem ist es laut dem Stand der Technik üblich, Lüftungs-, Heizungs- und Kühlungssysteme stets voneinander zu trennen. Eine Lüftungsanlage arbeitet hauptsächlich mit elektrisch betriebenen Ventilatoren und diversen Wärmetauschern zur Wärmerückgewinnung, welche vor allem im größeren Luftmengenbereich teurer und ineffizienter sind bzw. niedrige Wärmerückgewinnungszahlen aufweisen. Heizungssysteme wie Luft - Wasser - Wärmepumpen nutzen die vorherrschende Außenlufttemperatur als einzige Wärmequelle, welche ausgerechnet in der Heizperiode einen sehr niedrigen Anteil an nutzbarer Wärmeenergie aus der Umwelt erzeugt. Weiters kommt hinzu, dass zur Unterbringung einzelner Systeme, wie oben beschrieben, im Gebäude diverse Technikräume, Heizräume, Kamine, etc. eingerichtet werden müssen, weshalb solche Einzelsysteme einen wesentlichen Kostenfaktor in der Errichtung von Gebäuden darstellen und somit sehr unwirtschaftlich sind. Der Nachteil der Luft - Wasser - Wärmepumpen ist der niedrige Wirkungsgrad während der Hauptnutzungszeit (Herbst, Winter, Frühjahr), insbesondere weil in dieser Zeit tiefe Außenlufttemperaturen vorherrschen. Dadurch wird der Wirkungsgrad bzw. die Jahresarbeitszahl wesentlich verschlechtert. Je höher die Differenz zwischen der Außenlufttemperatur und der erforderlichen Vorlauftemperatur des Heizungssystems, desto ineffizienter arbeitet die Wärmepumpenanlage. Freie Lüftungssysteme, welche hauptsächlich mittels thermischen Auftrieb und ohne ganzjährigen Einsatz von Ventilatoren betrieben werden sind zum Teil erprobte, funktionierende Systeme, jedoch mit dem Nachteil, dass die Abluft und die darin enthaltene Wärmeenergie ohne Rückgewinnung in die Umwelt gelangen.

Aus der DE 196 14 913 A1 ist eine kontrollierte Wohnungs- und Hauslüftung mit Wärmerückgewinnung aus der Abluft über eine Wärmepumpe bekannt. Die DE 196 14 913 A1 offenbart damit eine Anordnung mit den Merkmalen des Oberbegriffs von Anspruch 1.

Aufgabe der Erfindung ist es die zuvor beschriebenen Nachteile zu vermeiden und ein gegenüber dem Stand der Technik verbesserte Anordnung von einem Belüftungssystem in einem Gebäude anzugeben.

Dies wird bei einer erfindungsgemäßen Anordnung von einem Belüftungssystem in einem Gebäude durch die Merkmale des Anspruchs 1 erreicht.

Dadurch, dass im Bereich des Daches des Gebäudes eine Wärmepumpe angeordnet ist, welcher der Abluftstrom vor der Ausleitung und/oder Außenluft von außerhalb des Gebäudes zuführbar ist, ist es möglich, das Lüftungs- und Heizungssystem so zu kombinieren, um neben der Attraktivität in der Anschaffung, die gesamte Effizienz beider genannten Systeme so zu erhöhen, dass eine neue Art der effizienten Wärme-, Kälte- und Warmwasserbereitstellung für Gebäude entsteht. Durch die Anordnung der Wärmepumpe im Dach, Dachbereich, Dachboden oder obersten Gebäudeteil entfällt ein Technikraum und die üblichen Luftleitungen in ohnehin niedrigen Untergeschoßen des Gebäudes. Der durch das Gebäude aufsteigende Luftstrom wird der Wärmepumpe zugeführt, wodurch die im Luftstrom befindliche Energie an die Wärmepumpe abgegeben werden kann, welche das erhaltene Temperaturniveau auf ein Nutzbares hebt, und diese Energie dem Heizungs- und Lüftungssystem rückführbar gemacht wird. Die Zuführung der Abluft erfolgt in einem Bereich, in dem die Abluft am meisten Wärmeenergie enthält - am obersten Punkt des Gebäudes. In der Hauptbetriebszeit des Belüftungssystems ist ein Zuschalten eines Ventilators nicht notwendig. Das Aufsteigen der Luft erfolgt im Hauptbetriebszustand - in anderen Worten in der Hauptbetriebszeit (Herbst, Winter, Frühjahr) - rein thermisch vom unteren Bereich des Gebäudes in den oberen Bereich.

Wenn die durch die Wärmepumpe dem Luftstrom entzogene Wärmeenergie an die Heiz-/ Kühleinrichtung - beispielsweise in Form eines Kühl/Heizregisters (kombiniert oder getrennt) - übertragbar ist, wobei die in der Außenluftleitung einströmende Luft durch die Heiz-/ Kühleinrichtung zusätzlich erwärmbar ist, so kann das thermische Aufsteigen der z.B. durch Erdwärme vorgewärmten Luft im Inneren des Gebäudes durch die Heiz-/ Kühleinrichtung unterstützt werden. Die in die Außenluftleitung eintretende Luft wird erwärmt oder vorgewärmt und steigt somit entlang der Steigleitungen/-schächte im Gebäude auf - je nach Bedarf wird die Warmluft bzw. der erregte Luftstrom zum Belüften und ggf. zum Erwärmen einzelner Räume im Gebäude genutzt. Der thermische Auftrieb wird verstärkt durch weitere Temperaturquellen im Gebäude, wie beispielsweise, Heizungssysteme (z.B. Fußbodenheizungen), elektrische Einrichtungen, Personen oder auch Sonnenstrahlen, welches durch Fenster eintritt. Die Wärmepumpe kann eine reversible oder irreversible Wärmepumpe sein.

Wenn die zumindest eine Außenluftleitung sich von einer außerhalb vom Gebäude befindlichen Außenluftansaugung bis zum Eintritt im unteren Bereich des Gebäudes im Erdreich erstreckt und somit aufgrund der Erdwärme des Erdreiches einen Erdwärmetauscher ausbildet, so wird - vor allem in den kalten Jahreszeiten - die Außenluft durch die Erdwärme erwärmt, bevor diese ins Gebäude geführt wird. Es kann jedoch auch bei warmen Jahreszeiten und Hitzeperioden die kühlende Wirkung des Erdreiches genutzt werden, um das Gebäude durch abgekühlte Außenluft abzukühlen.

Wenn zumindest eine Außenluft Bypassleitung vorgesehen ist, welche neben der Außenluftleitung einen Luftstrom in den unteren Bereich des Gebäudes einleitet, wobei sich die zumindest eine Außenluft - Bypassleitung im Wesentlichen außerhalb des Erdreiches erstreckt, so kann Außenluft in das Gebäude eingebracht werden, welche nicht von der Temperatur des Erdreiches abhängig ist. In gewissen Betriebszuständen ist es nicht vorgesehen, die Temperatur des Erdreiches zu nutzen - der Luftstrom wird somit im Bereich oberhalb des Erdreiches in das Gebäude eingeleitet. Die Außenluft-Bypassleitung, oder in anderen Worten die Außenluftansaugung, kann an jeder Stelle im und um das Gebäude positioniert werden. Zu vermeiden ist jedoch jeglicher Wärmeaustausch mit dem Erdreich oder sonstigen Wärmequellen.

Wenn über eine Außenluftregelungseinrichtung die Zufuhr der Außenluft aus der Außenluftleitung und/oder der Außenluft-Bypassleitung zur Heiz-/ Kühleinrichtung geregelt werden kann, so kann je nach Außentemperatur oder gewünschten Betriebszustand ausgewählt werden, ob durch Erdwärme vorgewärmte Luft und/oder von der Erdwärme unabhängige Außenluft in das Gebäude eingeleitet werden sollte. Eine Mischung aus beiden ist ebenfalls möglich. Die einzelnen Luftmengen sind in der Regel abhängig von der gewünschten Mischtemperatur.

Wenn in der Abluftleitung im Bereich vor der Wärmepumpe eine Abluftregelungseinrichtung zur Regelung der Zufuhr der Menge des Luftstroms an die Wärmepumpe vorgesehen ist, so kann beispielsweise der Luftstrom aus dem Gebäude an die Wärmepumpe weitergeleitet werden oder auch externe Luft von außen, welche vorher nicht durch das gesamte Gebäude geleitet worden ist. Es kann auch eine Mischung aus Außenluft und/oder Abluft aus dem Gebäude an die Wärmpumpe weitergeleitet werden, um eine gewisse Temperatur einstellen zu können, welche der Wärmepumpe zugeführt wird. In manchen Fällen ist es notwendig nur Außenluft an die Wärmepumpe weiterzuleiten, z.B. dann wenn keine Luftführung durch das Gebäude notwendig ist oder stattfindet, aber dennoch Energie über die Wärmepumpe bezogen werden sollte, um zum Beispiel Warmwasser generieren zu können. Wenn die Außenluftregelungseinrichtung und die Abluftregelungseinrichtung durch angetriebene Regelklappen ausgebildet sind, so ist eine Verstellung der Einrichtungen bzw. eine Zuführung der einzelnen Luftströme, welche durch die Außenluftregelungseinrichtung und/oder die Abluftregelungseinrichtung gesteuert wird, automatisiert möglich.

Wenn eine Steuer- und Regelungseinrichtung zur Steuerung und Regelung der Temperatur und Luftverteilung der Außenluft der zumindest einen Außenluftleitung des Luftstroms und der Ausleitung des Luftstroms durch die Abluftleitung vorgesehen ist, so muss vom Benutzer des Belüftungssystems keine aktive Handlung vorgenommen werden, um die Belüftung und Heizung in dem Gebäude zu steuern oder zu regeln. Vor allem dann wenn zumindest ein Geschwindigkeitssensor zur Ermittlung der Geschwindigkeit und ein Temperatursensor zur Ermittlung der Temperatur in der Zuluftleitung und/oder in der Abluftleitung angeordnet ist und die Werte des Zuluft-, Abluft- und Außenluft - Temperatursensors sowie Geschwindigkeitssensors zusammen mit der Steuer- und Regelungseinrichtung, die Außenluftregelungseinrichtung, die Abluftregelungseinrichtung, die Wärmepumpe und die Heiz-/ Kühleinrichtung steuern und regeln. Durch die über die Temperatursensoren (außen und innen) und Geschwindigkeitssensor ermittelten Werte, die in der Steuer- und Regeleinrichtung vorprogrammierten Soll-Werte und der Erfassung der Erstellung der

Abluftregelungseinrichtung und der Außenluftregelungseinrichtung kann somit das gesamte Belüftungssystem automatisiert betrieben werden.

Wenn zur Erregung des Luftstroms in zumindest einer Außenluftleitung und/oder zumindest einer Zuluftleitung und/oder der Abluftleitung ein Ventilator angeordnet ist, so kann in ungünstigen Fällen - bei gewissen Verhältnissen zwischen Außen- und Innentemperatur am Gebäude - der Luftstrom auch durch das Zuschalten zumindest eines Ventilators erfolgen. Generell ist das System jedoch so ausgestattet, dass der Hauptbetrieb "ventilatorlos" erfolgen sollte. Kann z.B. kein thermisch erzeugter Luftstrom im Gebäude stattfinden, welche über das Zuführen von Erdwärme, das Zuführen von Wärme durch die Heiz-/ Kühleinrichtung oder durch die Regelung der Außenluftregelungseinrichtung oder Abluftregelungseinrichtung erfolgt, so kann zumindest ein Ventilator eingeschaltet werden. Auch dies kann automatisiert über die Steuer- und Regelungseinrichtung erfolgen.

Als besonders vorteilhaft hatte sich dabei herausgestellt, wenn in der zumindest einen Außenluftleitung und der zumindest einen Zuluftleitung die in das Gebäude eintretende Luft erwärmt wird und die erwärmte Luft im Inneren des Gebäudes zum Dach hin aufsteigt und einen Luftstrom erzeugt, wobei die im Luftstrom aufgenommene Wärmeenergie dem Luftstrom entziehbar und an zumindest eine Heiz-/ Kühleinrichtung im unteren Bereich des Gebäudes übertragbar ist. Dadurch entsteht ein kostengünstiges und effizientes System zur Belüftung, Temperierung und Beheizung eines Gebäudes. Es wird kein "Technikraum" benötigt, da die verbauten Komponenten nur sehr wenig Platz einnehmen.

Wenn im Hauptbetriebszustand oder der Hauptbetriebszeit des Belüftungssystems der Luftstrom vom unteren Bereich zum Dach ohne die Zuschaltung des Ventilators herstellbar ist, so werden Kosten zum Betreiben eines Ventilators eingespart. Weiters können Geräusche, welche oftmals beim Betreiben eines Ventilators entstehen, verhindert werden.

Weitere vorteilhafte Ausführungsformen sind in den abhängigen Unteransprüchen definiert.

Weitere Einzelheiten und Vorteile der vorliegenden Erfindung werden anhand der Figurenbeschreibung unter Bezugnahme auf die in den Zeichnungen dargestellten ausgeführten Ausführungsbeispiele im Folgenden näher erläutert. Darin zeigen
- Fig. 1: schematische Darstellung eines Gebäudes bei einer Außenlufttemperatur von -16°C,
- Fig. 2: schematische Darstellung eines Gebäudes bei einer Außenlufttemperatur von 24°C,
- Fig. 3: schematische Darstellung eines Gebäudes bei einer Außenlufttemperatur von 36°C mit Wärmeerzeugung,
- Fig. 4: schematische Darstellung eines Gebäudes bei einer Außenlufttemperatur von 36°C mit Kälteerzeugung,
- Fig. 5: Ausführungsbeispiel Belüftungssystem weitere Luftführungsvariante und
- Fig. 6: schematische Darstellung einer Wärmpumpe.

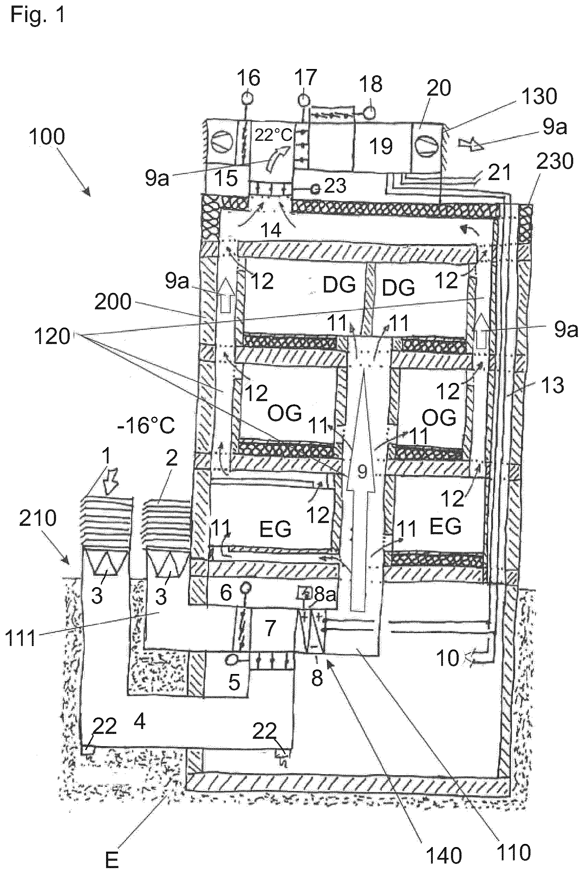

Figur 1 zeigt ein Gebäude 200 schematisch dargestellt in einem Querschnitt mit einem Belüftungssystem 100. Generell ist es wichtig, dass das Gebäude 200 einen hohen Grad an Luftdichtheit aufweist. Über die Außenluftleitung 110, welche mit der Außenluftansaugung 1 verbunden ist, wird ein Luftstrom 9 in das Gebäude eingebracht. Parallel dazu kann über einen Außenluft - Bypass 111 Außenluft in das Gebäude 200 eingebracht werden. Über die Außenluftregelungseinrichtung 5, 6 wird die Außenluft in die Frischluft - Mischkammer 7 weitergeführt. Je nach Klappenstellung der Außenluftregelungseinrichtung 5, 6 wird Außenluft über den Erdwärmetauscher 4 und/oder den Außenluft-Bypass111 bezogen und in die Frischluftmischkammer 7 eingebracht. Angrenzend an die Frischluftmischkammer 7 befindet sich die Heiz-/Kühleinrichtung 140. Die Heiz-/Kühleinrichtung 140 besteht aus einem Heiz/Kühlregister 8 in kombinierter oder einzelner Ausführung, welches durch die reversible oder irreversible Wärmepumpe 19 gespeist werden kann. Weiters kann eine zusätzliche Erwärmung der Außenluft über ein weiteres Heizregister 8a erfolgen, welches z.B. elektrisch erwärmbar ist. Dieses Heizregister 8a ist als optional anzusehen. Die durch den Erdwärmetauscher 4 und/oder das Heizelement 140 konditionierte Luft erzeugt einen thermischen Luftstrom 9, welcher im zumindest einen im wesentlich vertikal verlaufenden Steigkanal 120 im Gebäude 200 in Richtung

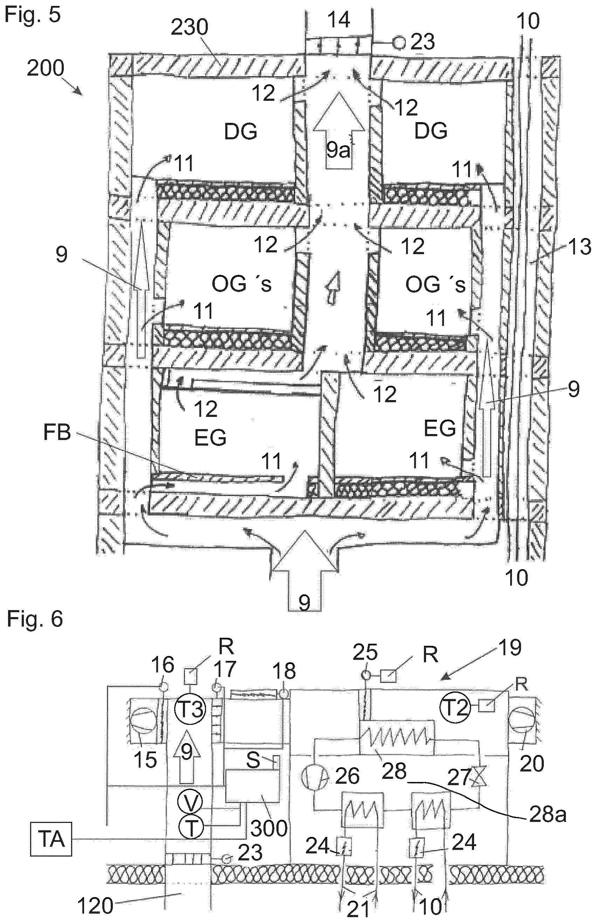

Dach 230 nach oben steigt. Dabei durchströmt der Luftstrom 9 über Ableitungen wie Zulufteinbringungen 11 die einzelnen Räume des Gebäudes 200. In der Figur 1 wird beispielsweise zumindest ein Raum des Erdgeschoß EG und zumindest ein Raum eines Obergeschoßes OG und zumindest ein Raum eines Dachgeschoßes DG mit dem Luftstrom 9 versorgt. Über die Zulufteinbringungen 11 strömt der Luftstrom 9 in die einzelnen Räume und tritt über die Abluftabsaugung 12 aus den einzelnen Räumen wieder aus. Die Zulufteinbringung 11 ist meist möglichst bodennah im Raum angeordnet. Die Abluftabsaugung 12 ist möglichst deckennah im Raum angeordnet. Sowohl Zulufteinbringung 11 als auch Abluftabsaugung 12 sind im Wesentlichen jeweils direkt mit dem zumindest einen Steigkanal 120 oder zumindest zwei unterschiedlichen Steigkanälen 120 verbunden. Im Sammelkanal 14 wird der Abluftstrom 9a gesammelt und in weiterer Folge über das Dach 230 des Gebäudes 200 zur Ausleitung des Abluftstroms 9a über die Abluftleitung 130 gebracht. Dabei durchströmt der Luftstrom die Abluftregelungseinrichtung 17. Weiters befindet sich in diesem Bereich eine Fortluft - Schließ- und Regelklappe 16, eine Abluft - Schließ- und Regelklappe 23, eine Außenluft - Schließ- und Regelklappe 18. Je nach Betriebsstellung werden die Klappen 16, 17, 18 geöffnet, stetig geregelt oder geschlossen. Die Regelklappen 16, 17, 18 können auch proportional gesteuert werden, um eine exakte Beimengung von Außenluft zu Gebäudeabluft gewährleisten zu können oder auch aus dem Gebäude 200 auszuleiten. In der Figur 1 wird dargestellt, wie der Abluftstrom 9a durch den Sammelkanal 14 und die Abluftschließ- und Regelklappe 23 zur Wärmepumpe 19 strömt. Die Klappenstellungen können über Sensoren, welche ihre Werte an eine Steuer und Regeleinrichtung 300 (in Fig 6 ersichtlich) abgeben, definiert werden. Dabei ist beispielsweise ein Temperatursensor (T) im Inneren des Gebäudes 200 bzw. im Abluftstrom 9a und auch ein Außentemperatursensor (TA) am Gebäude 200 notwendig. Bei einer Außentemperatur von beispielsweise -16°C wird die einströmende Luft durch den Erdwärmetauscher 4 erwärmt und sozusagen vorgewärmt. In weiterer Folge wird die Luft über die Heiz-/ Kühleinrichtung 140 auf Betriebstemperatur gebracht. Danach steigt die erwärmte Luft als Luftstrom 9 im Gebäude 200 über die Steigkanäle auf und wird auf die einzelnen Räume in den Geschoßen EG, OG, DG aufgeteilt. Im Inneren des Gebäudes 200 bzw. im Inneren der Räume wird über weitere Wärmequellen wie z.B. Heizungssysteme (z.B. Fußbodenheizung), elektrische Geräte, Personen, Sonneneinstrahlung etc. die Luft zusätzlich erwärmt und der Luftstrom 9 bzw. 9a wird
verstärkt. Der Auftrieb des Luftstromes 9 bzw. 9a erfolgt somit durch mehrere Faktoren; beispielsweise durch das Heizungssystem des jeweiligen Raumes. In der Regel ist dies eine Fußboden oder Wandheizung, es können jedoch auch andere Wärmequellen sein. Durch die somit im Gebäude 200 entstehende Thermik belüftet sich das Gebäude 200 somit selbstständig und sorgt für die Einbringung der gewünschten Temperatur in die einzelnen Räume des Gebäudes 200. Somit wird eine Temperatur von ca. 22 °C mit dem Fortlauf des Luftstromes 9 und 9a erzeugt. Der Abluftstrom 9a wird über die Abluftregelungseinrichtung 17, welche in der Figur 1 als offen dargestellt wird, an den Wärmetauscher der Wärmepumpe 19 geleitet. Die Wärmepumpe 19 entzieht dem Abluftstrom 9a zumindest einen Teil der Wärmeenergie über einen Wärmetauscher und führt diese im Bedarfsfall an das Heizkühlregister 8 der Heiz-/ Kühleinrichtung 140 weiter. Durch das Beaufschlagen mittels Wärmeenergie am Heiz/Kühlregister 8 wird der Außenluftstrom 9 zusätzlich angetrieben. Die Außenluft aus der Frischluftmischkammer 7 wird zusätzlich erwärmt, was ein Beschleunigen des Luftstroms 9 bewirkt. Weiters können an der reversiblen oder irreversiblen Wärmepumpe 19 auch Anschlussmöglichkeiten für Hochtemperaturwärmeverbraucher 21 vorgesehen sein. Über einen Installationsschacht 13 können auch Leitungen für Anschlussmöglichkeiten für Hochtemperaturverbraucher 21 und Niedertemperaturwärmeverbraucher 10 im Gebäude verlegt werden. An diese Anschlussmöglichkeit kann z.B. eine Flächenheizung oder ein Speicher angeschlossen werden. In der Figur 1 wird dargestellt, dass sich am Dach 230 im Bereich des Wärmetauschers 19 zumindest ein Ventilator 15, 20 befindet. Falls der Luftstrom 9 zusammenbrechen und keine Belüftung stattfinden würde, könnte dieser Ventilator 15, 20 aktiviert und der Luftstrom 9 bzw. 9a künstlich erzeugt werden. Dies ist jedoch nicht als genereller Betriebszustand anzusehen, sondern nur als eine Art Sonderbetriebszustand, falls Außen- und Innentemperatur am Gebäude ein ungünstiges Verhältnis zueinander darstellen würden. Diese Sonderbetriebszustände finden meist in den Sommermonaten statt. Die Außenluftregelungseinrichtung 5, 6 besteht aus einer Erdwärmetauscher - Schließ- und Regelklappe 5 und einer direkten Frischluftschließ- und Regelklappe 6. Im Fall der Figur 1 wird die Wärme der Erde durch den Erdwärmetauscher 4 genutzt - aus diesem Grund sind die Erdwärmetauscher- Schließ und Regelklappen 5 voll geöffnet, um die Luft vom Erdreich E vorgewärmt zu beziehen. Der Außenluft Bypass 111 wird über die direkte Frischluft - Schließ und Regelklappe 6 verschlossen und nicht in das Gebäude 200
eingeleitet. Man bezieht somit nur erwärmte Luft und erwärmt diese zusätzlich bei Bedarf durch die Heiz-/ Kühleinrichtung 140. Im Bedarfsfall kann die direkte Frischluftschließ und Regelklappe 6 zusätzlich leicht geöffnet werden, um zu der durch den Erdwärmetauscher 4 Luft noch kältere Luft hinzuzufügen. Der Erdwärmetauscher 4 im Erdreich kann auch im Grundwasser oder Grundwassernah angeordnet sein. Weiters ist zu sagen, dass die Luftmengeneinstellung in den Räumen über konstante oder variable Luftmengenregler mit oder ohne Stellantrieb durchgeführt werden kann. Diese können mit festen Werten voreingestellt sein oder auch durch Variablen wie z.B. Luftgüte, CO2-Gehalt, Lufttemperatur, etc eingestellt werden. Um Unterdruckbildung im Inneren des Gebäudes verhindern zu können, ist es möglich, im unteren Bereich des Gebäudes 200, bevorzugt im Bereich des Erdwärmetauschers 4, dem Außenluftbypass 111 oder der Außenluftleitung 110, also im Bereich vor oder nach der Heizkühleinrichtung 140 einen Ventilator oder ein anderes Element zur Erregung eines Luftstromes anzubringen. Wird beispielsweise durch die Abgabe im Bereich der Decke des Gebäudes 200 ein Unterdruck im Inneren des Gebäudes 200 erzeugt, kann dieser Ventilator oder dieses Element zur Erregung des Luftstromes zugeschaltet werden, um den Unterdruck auszubalancieren und zu verhindern. Unterdruck kann sich negativ auf die Wirkung von Dunstabzügen, Kachelöfen oder sonstigem auswirken.

Die in der Figur 1 schematisch dargestellte Anlage am Dach des Gebäudes 200 kann nicht nur auf dem Dach des Gebäudes 200 angeordnet sein, sondern auch an dessen Innenseite, beispielsweise im Dachboden. Wird die Anlage jedoch an der Außenseite des Gebäudes angeordnet, so wird diese vorzugsweise durch Dämmstoff thermisch isoliert, um einen besseren Wirkungsgrad zu erzeugen. In anderen Worten: für den Fall, dass die Anlage am Dach sich gänzlich im Freien befindet, keine Unterbringung in der Gebäudestruktur des Gebäudes 200 möglich ist, ist die Energieeffizienz durch eine thermische Isolierung an der Anlage gegeben, welche zumindest den erforderlichen U-Wert (Wärmedurchgangskoeffizient) der Außenwand- und Dachdämmung des Gebäudes 200 und der geltenden Bauordnung entspricht. Somit wird die Anlageneffizienz durch geringere Wärmeverluste gesteigert.

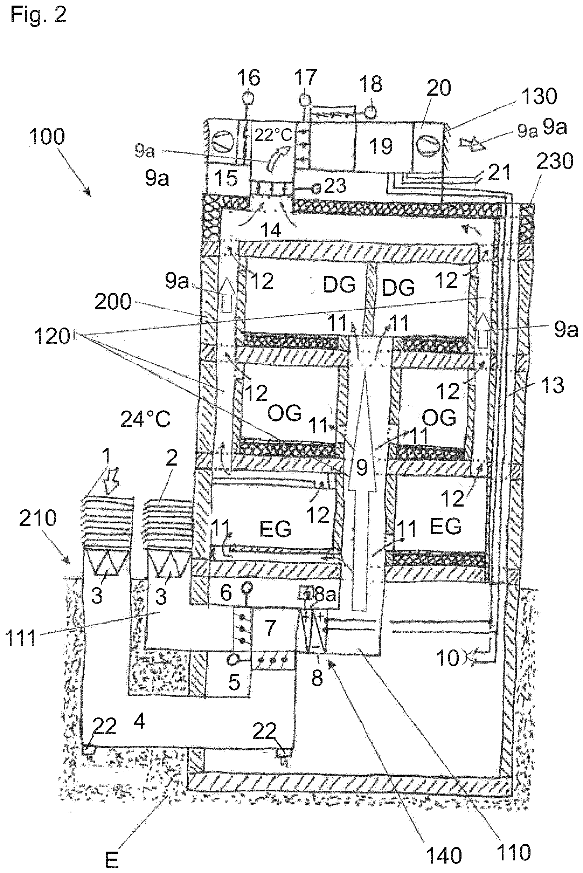

Die Figur 2 zeigt das Gebäude 200 schematisch dargestellt bei einer Außentemperatur von 24 °C. In diesem Fallbeispiel wird die direkte Frischluft - Schließ und Regelklappe 6 und die Erdwärmetauscher- Schließ und Regelklappe 5 proportional zwischen einer Offen- und Schließstellung verstellt. Durch die Vermischung von Frischluft bzw. durch den Erdwärmetauscher 4 vorgewärmte Luft in der Frischluftmischkammer 7 wird aufgrund der niedrigeren Temperaturen im Erdwärmetauscher 4 relativ zur Lufttemperatur von 24°C kühlere Luft im Inneren des Gebäudes erzeugt als außen. Dennoch ist die Innentemperatur im Gebäude generell gleich oder niedriger als die Außentemperatur. Aus diesem Grund steigt die somit konditionierte Außenluft (Soll-Temperatur zwischen 17 °C und 24°C) im Inneren des Gebäudes kaum auf. Falls der Luftstrom 9 bzw. 9a zusammenbrechen sollte, kann der Ventilator 20 beispielsweise in Form eines Quellmedienventilators aktiviert werden. Auch im Fallbeispiel der Figur 2 gezeigt, kann über die Wärmepumpe 19 Wärmeenergie genutzt werden, um die Heiz-/ Kühleinrichtung 140 zu speisen oder um andere Wärmeabnehmer zu versorgen.

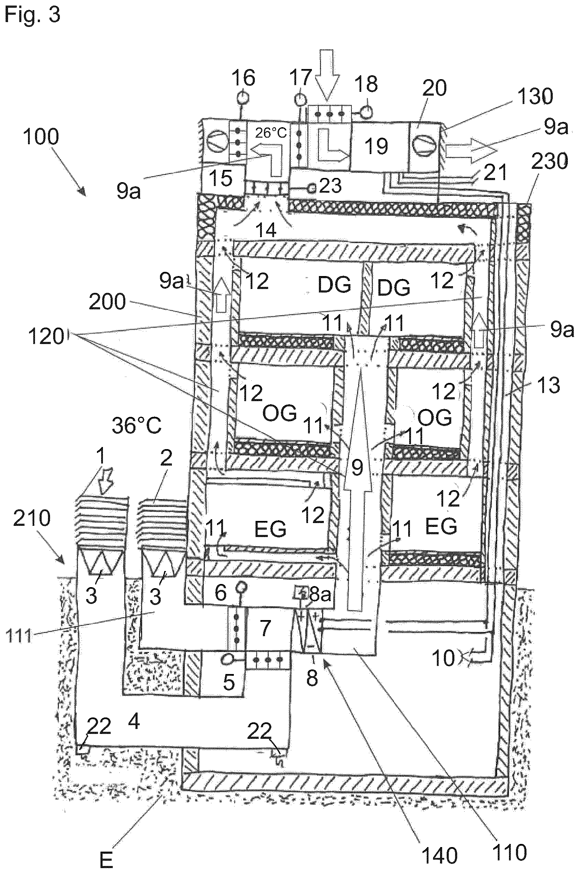

Figur 3 zeigt das Gebäude 200 mit dem Belüftungssystem 100 schematisch dargestellt bei einer Außentemperatur von 36°C am Gebäude 200. In diesem Fall ist eine Einleitung von kühler Luft ins Innere des Gebäudes 200 gewünscht. Aus diesem Grund wird über den Erdwärmetauscher 4 kühle Luft in das Gebäude 200 eingebracht. Der Luftstrom 9 bzw. 9a erfolgt entweder thermisch aufgrund des unterschiedlichen Temperaturniveaus zwischen Gebäudeinneren und Gebäudeäußerem oder - falls sich kein thermisch generierter Luftstrom 9 bzw. 9a ergeben sollte - über einen der Ventilatoren 15, 20.

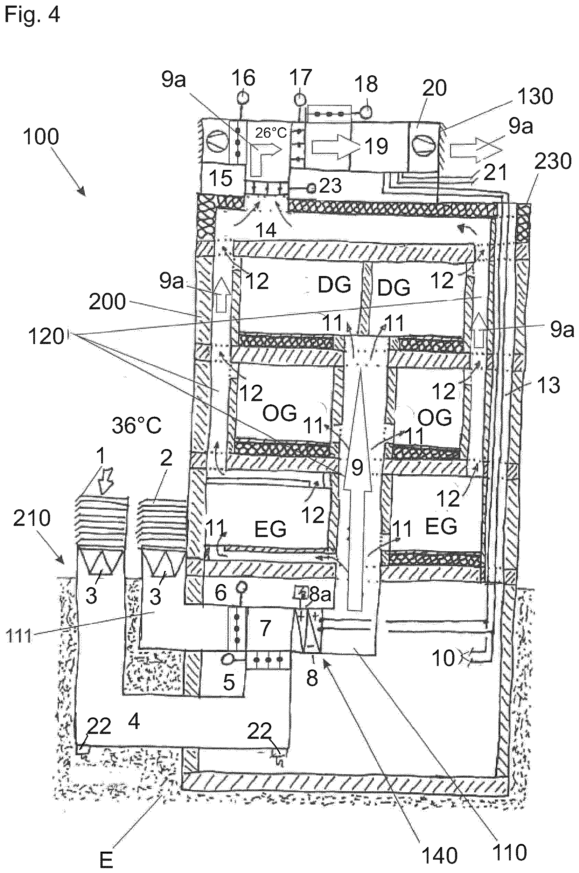

Im Falle der Figur 3 wird die Abluft des Gebäudes 200 nicht über die reversible oder irreversible Wärmepumpe 19 nach außen geleitet. Die Ableitung der Warmluft oder des Luftstroms 9 erfolgt direkt ins Freie ohne Kontakt zur Wärmepumpe 19. Aufgrund der niedrigen Gebäudeinnentemperatur von 26°C ist es ergiebiger, die Außenluft mit 36°C durch die Wärmepumpe 19 zu leiten, um Energie zu gewinnen. Die dadurch gewonnene Energie kann z.B. für Warmwasseraufbereitung verwendet werden oder auch im Wärmespeicher gespeichert werden. Dabei ist die Abluftregelungseinrichtung 17 zumindest teilweise oder ganz geschlossen, um die Abluft des Luftstromes 9 nach außen zu leiten, ohne zur Wärmepumpe 19 zu gelangen oder - im Bedarfsfall - nur vermindert dort anzukommen. Es kann auch vorgesehen sein, dass die Außenluft direkt an die Wärmepumpe 19 geleitet wird, indem die Regelklappe 18 aktiviert wird. Hierzu wird in der Figur 4 näher eingegangen.

In der Figur 4 wird gezeigt, wie das Gebäude 200 gekühlt werden kann. Es kann die durch die reversible Wärmepumpe 19 aufgenommene Energie auch zur Kühlung der Heiz-/ Kühleinrichtung 140 verwendet werden - sozusagen arbeitet die Heiz-/Kühleinrichtung 140 ausschließlich als Luftkühler zur Reduktion der Innentemperatur im Gebäude 200, was durch die Realisierung der Heiz-/ Kühleinrichtung 140 als Heiz/Kühlregister 8 in kombinierter oder getrennter Ausführung erreicht wird. Generell ist zu sagen, dass die Heiz-/ Kühleinrichtung 140 sowohl als Kombinationsgerät als auch einzeln hintereinander verbaut werden kann. Aufgrund des geringeren Widerstandes (Heizschlangen im Luftstrom) empfiehlt sich der Einsatz einer kombinierten Registereinheit, welche aus dem Stand der Technik bekannt ist. Der durch die Abluftregelungseinrichtung 17 an die reversible Wärmepumpe 19 geleitete Luftstrom 9a ist im Falle der Figur 4 kälter als die Außentemperatur am Gebäude 200. In diesem besonderen Falle kann es natürlich sein, dass sich kein thermischer Luftstrom 9 bzw. 9a bildet, ein Zuschalten des Ventilators 15 und/oder 20 wird unter Umständen erforderlich. Um höhere Kühlleistungen zu erzielen, weil die Luftmenge aus dem Luftstrom 9a begrenzt und daher zu gering sein kann, ist es möglich über die Schließ- und Regelklappe 18 zusätzlich Außenluft bei zu mischen. Für den Fall, dass der aus dem Gebäude 200 austretende Abluftstrom 9a eine zu geringe Menge aufweist um für eine Heiz oder Kühlleistung zu sorgen, kann Außenluft über die Regelklappe 18 beigemengt werden. Generell ist zur Wärmepumpe 19 zu sagen, dass diese als reversibel oder irreversibel ausgeführte Wärmepumpe 19 ausgestaltet sein kann. Eine reversible Wärmepumpe 19 wird dann eingesetzt, wenn eine Kälteerzeugung notwendig
ist. Ist keine Kälteerzeugung notwendig, kann auf eine irreversible Wärmepumpe 19 zurückgegriffen werden.

Die Figur 5 zeigt einen weiteren Querschnitt durch das Gebäude 200 schematisch dargestellt. Hier wird mindestens eine weitere Möglichkeit aufgezeigt, wie das Konzept durch weitere Luftführungsvarianten aussehen kann. Im Vergleich zu Figur 1 bis Figur 4 ist in Figur 5 der Außenluftstrom 9 an die Außenwand und der Abluftstrom 9a atriumartig ins Gebäudeinnere gelegt worden. Durch die im Wesentlichen vertikal verlaufenden Steigkanäle 120 zur Führung des Luftstromes 9 bzw. 9a im Inneren des Gebäudes 200 steigt der thermisch angeregte Luftstrom 9 bzw. 9a im Gebäude 200 nach oben. An den Zulufteinbringungen 11 kann der konditionierte Außenluftstrom 9 in die einzelnen Räume wie beispielsweise im Erdgeschoß EG oder in einem der Obergeschoße OG eindringen. An den Abluftabsaugungen 12 kann der konditionierte Abluftstrom 9a aus den einzelnen Räumen austreten und beispielsweise auch direkt in den nächsten - darüber liegenden - Raum gelangen. Die Verbindung der Räume kann somit auch direkt erfolgen und ein atriumartiger, von allen Räumen gemeinsam genutzter Steigkanal 120 ist nicht zwingend erforderlich. Der Steigkanal 120 muss wie bereits oben beschrieben nicht zwangsweise im mittleren Bereich eines Gebäudes (atriumartig) angeordnet sein, sondern kann sich beispielsweise auch entlang einer Außenwand erstrecken, wie in Fig. 5 dargestellt. Es können auch mehrere Steigkanäle 120 im Gebäude 200 angeordnet sein, wobei sich nicht zwangsweise alle Steigkanäle 120 vom Keller bis hin zur Decke erstrecken müssen. Jeder Raum weist eine eigene Zuluft- und eine eigene Abluftöffnung (11, 12) auf. Die Darstellung in Fig. 5 zeigt, dass die Zuluft nicht zwingend direkt aus den Schächten in die Räume gelangen muss bzw. dass ein Verziehen der Luftleitungen im Fußbodenaufbau des jeweiligen Geschoßes oder an der Decke bzw. innerhalb einer Zwischendecke möglich ist. Dasselbe gilt auch für die Abluft.
Weiters vertikal im Gebäude angeordnet befindet sich ein Installationsschacht 13, welcher die Leitungen für weitere Anschlussmöglichkeiten 10 für Nieder-und Hochtemperatur-Wärmeverbraucher (z.B. Flächenheizung, Speicher, Warmwasserbereitung) in sich trägt. Dieser Installationsschacht 13 erstreckt sich vom obersten Gebäudeteil 230 bis in den unteren Bereich 210 des Gebäudes 200. Es ist jedoch auch möglich, Rohre und Leitungen z.B. an der Gebäudefassade oder innerhalb von Ziegelwänden, etc. zu montieren - ein Installationsschacht 13 ist nicht zwingend erforderlich. Im Sammelkanal 14 für die Abluft befindet sich die Abluft-Schließ und Regelklappe 23 mit optionalem Antrieb. Bedeutet, dass die Regelklappe entweder manuell oder durch einen Antrieb und auch automatisiert geöffnet und geschlossen werden kann, um den Luftstrom 9a kontrollierter aus dem Gebäude 200 entweichen zu lassen. Die Verstellung dieser Regelklappen und aller anderen Regelklappen erfolgt proportional.

Die Figur 6 zeigt ein Schema der irreversiblen Wärmepumpe 19. Eine reversible Wärmepumpe zur Kälteerzeugung wird im Bedarfsfall nach dem Stand der Technik verwendet. Dieses zeigt zwei Ventilatoren 15, 20 unterstützend für den Sonderbetriebszustand, in welchem sich kein thermischer Auftrieb des Luftstromes 9 ergibt. Wie bereits in der Figur 4 erklärt, kann bei gewissen Außentemperaturen das Zuschalten eines Ventilators - wie z.B. dem Ventilator 15, 20 notwendig werden. Im Wesentlichen vertikal verlaufenden Steigkanal 120 befinden sich zumindest zwei Sensoren. Ein Geschwindigkeitssensor V zur Ermittlung der Geschwindigkeit des Luftstroms 9 im Steigkanal 120 und ein Temperatursensor T zur Ermittlung der Temperatur des Luftstroms im Steigkanal 120. Die durch die Sensoren V, T ermittelten Werte werden an eine Steuer- und Regelungseinrichtung 300 gekoppelt mit einem Außentemperatursensor (TA) weitergegeben. Die Steuer- und Regelungseinrichtung 300 beeinflusst z.B. die Klappenstellungen der Fortluft-Schließ und Regelklappe 16, der Abluft- Schließ und Regelklappe 17 und der Außenluft- Schließ und Regelklappe 18 und auch - in der Figur 6 nicht ersichtlich die Erdwärmetauscher - Schließ- und Regelklappe 5 und die direkte Frischluft- Schließ-Regelklappe 6. Weiters beeinflusst die Steuer- und Regeleinheit 300 den Betrieb der Ventilatoren 15, 20, die Bypass-Klappe mit Antrieb für freie Lüftung ohne Wärmeentnahme 25 und das in der Figur 6 nicht ersichtliche Heizregister elektrisch 8a und das Heiz/Kühlregister 8 gespeist von der Wärmepumpe (siehe Figur 1). Die Wärmepumpe 19 besteht im Wesentlichen aus mindestens einem Verdampfer 28, mindestens einem Verdichter 26, mindestens einem Verflüssiger 28a (mit und ohne Enthitzer), mindestens einem Entspannungsventil 27. Weiters können Elektroheizpatronen 24 optional zugeschaltet werden um beispielsweise fehlende Leistungsspitzen abzudecken oder Warmwasser zu erzeugen, sobald die Wärmepumpe 19 in ungünstigen Fällen keine Energie abgeben kann bzw. einen technischen Defekt aufweist. Die Anschlussmöglichkeit für Hochtemperatur-Wärmeverbraucher 21 und die Anschlussmöglichkeit für Niedertemperatur-Wärmeverbraucher 10 erstreckt sich von der Wärmepumpe 19 in den unteren Bereich des Gebäudes. Die Verbindung zwischen der Steuerregeleinheit 300 und den einzelnen angesteuerten Elementen sowie Verbrauchern kann sowohl durch Kabel oder auch kabellos (Funkverbindung wie beispielsweise W-LAN, Bluetooth, Infrarot) erfolgen. Dies wird beispielsweise bei der Bypass-Klappe mit Antrieb für freie Lüftung ohne Wärmeentnahme 25 mit dem Empfänger R angedeutet, welches die Signale vom Sender S angeordnet an der Steuer- und Regeleinrichtung 200 empfängt. Jeder Verbraucher im Gebäude 200 kann mit einem solchen Empfänger E ausgestattet werden, oder mittels Kabel direkt mit der Steuer- und Regelungseinrichtung 300 verbunden sein. Die Ventilatoren 15, 20 können speziell schallgedämpfte Fortluftventilatoren sein, um eine Geräuschentwicklung im Gebäude verhindern zu können. Der Geschwindigkeitssensor V dient zur Überwachung der erforderlichen Mindestströmung des Abluftstroms 9a. Nach den Werten, welche der Geschwindigkeitssensor V erfasst, werden die einzelnen Klappenstellungen an den Klappen 16, 17,18, 23, 5, 6, die Leistung der Ventilatoren 15 und 20 sowie die Leistung der Heiz-/ Kühleinrichtung 140 geregelt. Es können mehrere Temperatursensoren (T1, T2,...) an verschiedenen Zu- und Abluftbereichen des Gebäudes angebracht werden, um die Temperaturzustände überprüfen zu können und deren Werte in die Steuerung und Regelung des Belüftungssystems 100 mit einzubeziehen.

## Patentansprüche

1. Anordnung von einem Belüftungssystem (100) in einem Gebäude zur Erzeugung eines Luftstromes in diesem Gebäude (200), das Belüftungssystem (100) umfassend
- zumindest eine Außenluftleitung (110) zur Zuführung von Luft in das Gebäude (200) in einem unteren Bereich (210) des Gebäudes (200),
- gegebenenfalls zumindest eine zuschaltbare Heiz- und/oder Kühleinrichtung (140) in der Außenluftleitung (110),
- zumindest einen im Wesentlichen vertikal verlaufenden Steigkanal (120) zur Führung eines Zuluftstromes (9) und Abluftstromes (9a) im Inneren des Gebäudes (200),
- zumindest eine Abluftleitung (130) an einem Dach (230) des Gebäudes (200) zur Ausleitung des Abluftstromes (9a),
**dadurch gekennzeichnet, dass** im Bereich des Daches (230) des Gebäudes (200) eine Wärmepumpe (19) angeordnet ist, welcher wahlweise der Abluftstrom (9a) vor der Ausleitung und/oder Außenluft von außerhalb des Gebäudes (200) zuführbar ist.

2. Anordnung nach Anspruch 1, **dadurch gekennzeichnet, dass** die durch die Wärmepumpe (19) dem Abluftstrom (9a) entzogene Wärmeenergie an die Heiz- und/oder Kühleinrichtung (140) und gegebenenfalls weitere Wärmeverbraucher übertragbar ist, wobei die in die Außenluftleitung (110) einströmende Luft durch die Heiz- und/oder Kühleinrichtung (140) zusätzlich erwärmbar ist.

3. Anordnung nach Anspruch 1 oder 2, **dadurch gekennzeichnet, dass** die zumindest eine Außenluftleitung (110) sich von einer außerhalb vom Gebäude (200) befindlichen Außenluftansaugung (1) bis zum Eintritt im unteren Bereich (210) des Gebäudes (200) im Erdreich (E) erstreckt und somit aufgrund der Erdwärme des Erdreiches (E) einen Erdwärmetauscher (4) ausbildet.

4. Anordnung nach einem der Ansprüche 1 bis 3, **dadurch gekennzeichnet, dass** zumindest eine Außenluft-Bypassleitung (111) vorgesehen ist, welche neben der Außenluftleitung (110) einen Luftstrom in den unteren Bereich (210) des Gebäudes (200) einleitet, wobei sich die zumindest eine Außenluft-Bypassleitung (111) im Wesentlichen außerhalb des Erdreiches (E) erstreckt.

5. Anordnung nach Anspruch 4, **dadurch gekennzeichnet, dass** über eine Außenluftregelungseinrichtung (6) die Zufuhr der Außenluft aus der Außenluftleitung (110) und/oder der Außenluft-Bypassleitung (111) an die Heiz- und/oder Kühleinrichtung (140) geregelt werden kann.

6. Anordnung nach einem der Ansprüche 1 bis 5, **dadurch gekennzeichnet, dass** in der Abluftleitung (130) im Bereich vor der Wärmepumpe (19) eine Abluftregelungseinrichtung (17) und eine Außenluft - Schließ- und Regelklappe (18) zur Regelung der Zufuhr der Menge des Luftstromes (9) aus dem Gebäude (200) und/oder von direkter Außenluft an die Wärmepumpe (19) vorgesehen ist.

7. Anordnung nach Anspruch 6, **dadurch gekennzeichnet, dass** die Außenluftregelungseinrichtung (6) und/oder die Abluftregelungseinrichtung (17) und/oder die Außenluft - Schließ- und Regelklappe (18) durch - vorzugsweise motorisch - angetriebene Regelklappen ausgebildet sind.

8. Anordnung nach einem der Ansprüche 1 bis 7, **dadurch gekennzeichnet, dass** eine Steuer- und Regeleinrichtung (300) zur Steuerung und Regelung der Verteilung der Zuluft der zumindest einen Außenluftleitung (110), des Zuluftstromes (9), der direkten Zufuhr von Außenluft zur Wärmepumpe (19) und/oder der Ausleitung des Abluftstromes (9a) durch die Abluftleitung (130) vorgesehen ist.

9. Anordnung nach einem der Ansprüche 1 bis 8, **dadurch gekennzeichnet, dass** außenseitig am Gebäude (200) und/oder in der Außenluftleitung (110) ein Außentemperatursensor (TA) und im Steigkanal (120) und/oder in der Abluftleitung (130) zumindest ein Geschwindigkeitssensor (V) zur Ermittlung der Geschwindigkeit und ein Temperatursensor (T) zur Ermittlung der Temperatur des Luftstromes (9) angeordnet ist.

10. Anordnung nach Anspruch 9, **dadurch gekennzeichnet, dass** die Werte des Außentemperatursensors (TA), des Temperatursensors (T) und des Geschwindigkeitssensors (V) zusammen mit der Steuer- und Regeleinrichtung (300) die Außenluftregelungseinrichtung (6), die Abluftregelungseinrichtung (17), die Wärmepumpe (19) und die Heiz- und/oder Kühleinrichtung (140) steuern und regeln.

11. Anordnung nach einem der Ansprüche 1 bis 10, **dadurch gekennzeichnet, dass** zur Erregung des Luftstromes (9) in zumindest einer Außenluftleitung (110) und/oder zumindest einem Steigkanal (120) und/ oder der Abluftleitung (130) ein Ventilator (15, 20) angeordnet ist.

12. Gebäude (200) mit einer Anordnung von einem Belüftungssystem (100) nach einem der Ansprüche 1 bis 11.

13. Verfahren zum Belüften eines Gebäudes nach Anspruch 12, wobei in der zumindest einen Außenluftleitung (110) und dem zumindest einen Steigkanal (120) die in das Gebäude (200) eintretende Luft erwärmt wird und die erwärmte Luft im Inneren des Gebäudes (200) zum Dach (230) hin aufsteigt und einen Luftstrom (9) erzeugt, **dadurch gekennzeichnet, dass** die im Luftstrom (9) aufgenommene Wärmeenergie dem Abluftstrom (9a) entziehbar und an zumindest eine Heiz- und/oder Kühleinrichtung (140) und gegebenenfalls weitere Wärmeverbraucher im unteren Bereich (210) des Gebäudes (200) übertragbar ist.

## Claims

1. An arrangement of a ventilation system (100) in a building for creating an air flow in said building (200), the ventilation system (100) including
- at least one outside air conduit (110) for feeding air into the building (200) in a lower region (210) of the building (200),
- optionally at least one heating and/or cooling device (140) which can be switched on in the outside air conduit (110),
- at least one substantially vertically extending riser duct (120) for guiding a feed air flow (9) and an exhaust air flow (9a) in the interior of the building (200), and
- at least one exhaust air conduit (130) on a roof (230) of the building (200) for discharge of the exhaust air flow (9a),
**characterised in that** arranged in the region of the roof (230) of the building (200) is a heat pump (19) to which the exhaust air flow (9a) prior to discharge and/or outside air from outside the building (200) can be fed.

2. An arrangement according to claim 1 **characterised in that** the heat energy extracted from the exhaust air flow (9a) by the heat pump (19) can be transferred to the heating and/or cooling device (140) and optionally further heat consumers, wherein the air flowing into the outside air conduit (110) can be additionally warmed by the heating and/or cooling device (140).

3. An arrangement according to claim 1 or claim 2 **characterised in that** the at least one outside air conduit (110) extends from an outside air intake (1) disposed outside the building (200) to the entrance in the lower region (210) of the building (200) in the ground region (E) and thus constitutes a geothermal heating exchanger (4) by virtue of the geothermal heat of the ground (E).

4. An arrangement according to one of claims 1 to 3 **characterised in that** there is provided at least one outside air bypass conduit (111) which besides the outside air conduit (110) introduces an air flow into the lower region (210) of the building (200), wherein the at least one outside air bypass conduit (111) extends substantially outside the ground (E).

5. An arrangement according to claim 4 **characterised in that** the feed of outside air from the outside air conduit (110) and/or the outside air bypass conduit (111) to the heating and/or cooling device (410) can be regulated by way of an outside air regulating device (6).

6. An arrangement according to one of claims 1 to 5 **characterised in that** provided in the exhaust air conduit (17) in the region upstream of the heat pump (19) is an exhaust air regulating device (17) and an outside air closing and regulating flap (18) for regulating the feed of the amount of the air flow (9) from the building (200) and/or of direct outside air to the heat pump (19).

7. An arrangement according to claim 6 **characterised in that** the outside air regulating device (6) and/or the exhaust air regulating device (17) and/or the outside air closing and regulating flap (18) are formed by driven regulating flaps, preferably being motor-driven.

8. An arrangement according to one of claims 1 to 7 **characterised in that** there is provided an open-loop and closed-loop control device (300) for open-loop and closed-loop control of the distribution of the feed air of the at least one outside air conduit (110) of the feed air flow (9), the direct feed of outside air to the heat pump (19) and/or the discharge of the exhaust air flow (9a) through the exhaust air conduit (130).

9. An arrangement according to one of claims 1 to 8 **characterised in that** arranged at the outside on the building (200) and/or in the outside air conduit (110) is an outside temperature sensor (TA) and arranged in the riser duct (120) and/or in the exhaust air conduit (130) is at least one speed sensor (V) for ascertaining the speed and a temperature sensor (T) for ascertaining the temperature of the air flow (9).

10. An arrangement according to claim 9 **characterised in that** the values of the outside temperature sensor (TA), the temperature sensor (T) and the speed sensor (V) together with the open-loop and closed-loop control device (300) provide for open-loop and closed-loop control of the outside air regulating device (6), the exhaust air regulating device (17), the heat pump (19) and the heating and/or cooling device (140).

11. An arrangement according to one of claims 1 to 10 **characterised in that** a fan (15, 20) is arranged for creating the air flow (9) in at least one outside air conduit (110) and/or at least one riser duct (120) and/or the exhaust air conduit (130).

12. A building (200) comprising an arrangement of a ventilation system (100) according to one of claims 1 to 11.

13. A method of ventilating a building according to claim 12 wherein the air passing into the building (200) is warmed in the at least one outside air conduit (110) and the at least one riser duct (120) and the warmed air rises in the interior of the building (200) towards the roof (230) and creates an air flow (9), **characterised in that** the heat energy absorbed in the air flow (9) can be extracted from the exhaust air flow (9a) and can be transferred to at least one heating and/or cooling device (140) and optionally further heat consumers in the lower region (210) of the building (200).

## Revendications

1. Dispositif d'un système de ventilation (100) dans un bâtiment pour la production d'un flux d'air dans ce bâtiment (200), le système de ventilation (100) comprenant
- au moins une conduite d'air extérieur (110) pour l'alimentation en air dans le bâtiment (200) dans une zone inférieure (210) du bâtiment (200),
- le cas échéant, au moins un dispositif de chauffage et / ou de refroidissement (140) pouvant être mis en circuit dans la conduite d'air extérieur (110),
- au moins un canal montant (120) passant essentiellement verticalement pour guider un flux d'air amené (9) et un flux d'air sortant (9a) à l'intérieur du bâtiment (200),
- au moins une conduite d'air sortant (130) sur un toit (230) du bâtiment (200) pour l'évacuation du flux d'air sortant (9a),
**caractérisé en ce que** dans la zone du toit (230) du bâtiment (200) est disposée une pompe à chaleur (19) à laquelle peut être amené facultativement le flux d'air sortant (9a) avant l'évacuation et / ou l'air extérieur de l'extérieur du bâtiment (200).

2. Dispositif selon la revendication 1, **caractérisé en ce que** l'énergie thermique extraite du flux d'air sortant (9a) par la pompe à chaleur (19) peut être transmise au dispositif de chauffage et / ou de refroidissement (140) et, le cas échéant, à d'autres consommateurs de chaleur, dans lequel l'air affluant dans la conduite d'air extérieur (110) peut être chauffé, en outre, par le dispositif de chauffage et / ou de refroidissement (140).

3. Dispositif selon la revendication 1 ou 2, **caractérisé en ce que** la au moins une conduite d'air extérieur (110) s'étend d'une aspiration d'air extérieur (1) se trouvant à l'extérieur du bâtiment (200) jusqu'à l'entrée dans la zone inférieure (210) du bâtiment (200) en sous-sol (E) et constitue ainsi un échangeur géothermique (4) en raison de la chaleur géothermique du sous-sol (E).

4. Dispositif selon l'une des revendications 1 à 3, **caractérisé en ce qu'**est prévue au moins une conduite de dérivation de l'air extérieur (111), laquelle introduit, à côté de la conduite d'air extérieur (110), un flux d'air dans la zone inférieure (210) du bâtiment (200), dans lequel la au moins une conduite de dérivation de l'air extérieur (111) s'étend essentiellement à l'extérieur du sous-sol (E).

5. Dispositif selon la revendication 4, **caractérisé en ce que** l'amenée de l'air extérieur provenant de la conduite d'air extérieur (110) et / ou de la conduite de dérivation de l'air extérieur (111) au dispositif de chauffage et / ou de refroidissement (140) peut être régulée par un dispositif de régulation de l'air extérieur (6).

6. Dispositif selon l'une des revendications 1 à 5, **caractérisé en ce que** dans la conduite d'air sortant (130) est prévu, dans la zone devant la pompe à chaleur (19), un dispositif de régulation d'air sortant (17) et un clapet de fermeture et de régulation de l'air extérieur (18) pour réguler l'amenée de la quantité du flux d'air (9) provenant du bâtiment (200) et / ou de l'air extérieur direct à la pompe à chaleur (19).

7. Dispositif selon la revendication 6, **caractérisé en ce que** le dispositif de régulation de l'air extérieur (6) et / ou le dispositif de régulation de l'air sortant (17) et / ou le clapet de fermeture et de régulation de l'air extérieur (18) sont constitués par des clapets de régulation entraînés - de préférence par moteur -.

8. Dispositif selon l'une des revendications 1 à 7, **caractérisé en ce qu'**est prévu un dispositif de commande et de régulation (300) pour la commande et la régulation de la distribution de l'air amené de la au moins une conduite d'air extérieur (110), du flux d'air amené (9), de l'amenée directe d'air extérieur à la pompe à chaleur (19) et / ou de l'évacuation du flux d'air sortant (9a) par la conduite d'air sortant (130).

9. Dispositif selon l'une des revendications 1 à 8, **caractérisé en ce qu'**est disposé à l'extérieur du bâtiment (200) et / ou dans la conduite d'air extérieur (110) un capteur de température extérieure (TA) et dans le canal montant (120) et / ou dans la conduite d'air sortant (130) au moins un capteur de vitesse (V) pour détecter la vitesse et un capteur de température (T) pour détecter la température du flux d'air (9).

10. Dispositif selon la revendication 9, **caractérisé en ce que** les valeurs du capteur de température extérieure (TA), du capteur de température (T) et du capteur de vitesse (V) conjointement avec le dispositif de commande et de régulation (300) commandent et régulent ensemble le dispositif de régulation de l'air extérieur (6), le dispositif de régulation de l'air sortant (17), la pompe à chaleur (19) et le dispositif de chauffage et / ou de refroidissement (140).

11. Dispositif selon l'une des revendications 1 à 10, **caractérisé en ce qu'**est disposé un ventilateur (15, 20) pour activer le flux d'air (9) dans au moins une conduite d'air extérieur (110) et / ou au moins un canal montant (120) et / ou dans la conduite d'air sortant (130).

12. Bâtiment (200) avec un dispositif d'un système de ventilation (100) selon l'une des revendications 1 à 11.

13. Procédé pour ventiler un bâtiment selon la revendication 12, dans lequel dans la au moins une conduite d'air extérieur (110) et le au moins un canal montant (120) l'air entrant dans le bâtiment (200) est chauffé et l'air chauffé à l'intérieur du bâtiment (200) monte jusqu'au toit (230) et produit un flux d'air (9), **caractérisé en ce que** l'énergie thermique recueillie dans le flux d'air (9) peut être extraite du flux d'air sortant (9a) et peut être transmise à au moins un dispositif de chauffage et de refroidissement (140) et, le cas échéant, à d'autres consommateurs de chaleur dans la zone inférieure (210) du bâtiment (200).
